Europäisches Patentamt

European Patent Office

Office européen des brevets

(11) Publication number: **0 150 595**
A2

## EUROPEAN PATENT APPLICATION

(21) Application number: **84308673.7**

(22) Date of filing: **13.12.84**

(51) Int. Cl.⁴: **C 08 L 57/04, C 08 L 23/08**

(30) Priority: **05.01.84 GB 8400150**

(43) Date of publication of application: **07.08.85**
**Bulletin 85/32**

(84) Designated Contracting States: **AT BE CH DE FR GB IT LI NL SE**

(71) Applicant: **BP Chemicals Limited, Belgrave House 76 Buckingham Palace Road, London, SW1W 0SU (GB)**

(72) Inventor: **Umblepy, Jeffrey David BP Chem.(Suisse) SA, Chem. & Plast. Lab. 11 Rue de Veyrot Box 149, CH-1217 Meyrin 2 (CH)**

(74) Representative: **Denbigh, Keith Warwick et al, c/o The British Petroleum Company plc Patents Division Chertsey Road, Sunbury-on-Thames Middlesex, TW16 7LN (GB)**

(54) **Polymer composition.**

(57) A crosslinkable composition comprising a thermoplastic silyl modified polymer and a silanol condensation catalyst pre-supported on a finely divided solid material. The silyl modified polymer contains hydrolysable silane groups introduced into the polymer by copolymerisation, grafting or transesterification. The finely divided solid material has a particle diameter not greater than 20 microns and is preferably selected from porous materials which do not melt or decompose during thermoforming. The silanol condensation catalyst is preferably a dialkyl tin dicarboxylate. The use of a silanol condensation catalyst which is pre-supported reduces premature crosslinking on extrusion of the composition.

EP 0 150 595 A2

1

## POLYMER COMPOSITION

The present invention relates to crosslinkable organic polymer compositions.

It is known that thermoplastic organic polymers containing hydrolysable silane groups can be crosslinked by the action of water, preferably in the presence of a so-called silanol condensation catalyst. A number of methods are known for producing such crosslinkable organic polymers. One method comprises copolymerising unsaturated organic monomers with unsaturated silane compounds containing hydrolysable groups. Examples of this method are described in GB-A-2028831 and GB-A-2039513 which disclose the preparation of crosslinkable copolymers of ethylene and an ethylenically unsaturated silane compound by copolymerising the monomers at relatively high temperatures and pressures in the presence of a radical polymerisation initiator. Another example of this copolymerisation method is described in GB-A-1415194 which discloses the preparation of crosslinkable copolymer by contacting ethylene, optionally with other olefinically unsaturated comonomer, and a terminally unsaturated silane compound with certain defined Ziegler catalysts under polymerisation conditions which preferably employ relatively low temperatures and pressures.

Another known method for making such crosslinkable organic polymers containing hydrolysable silane groups comprises graft-copolymerising an ethylenically unsaturated silane compound on to an organic polymer preferably in the presence of a free radical initiator. Examples of this method are disclosed in GB-A-1357549, GB-A-1234034 and GB-A-1286460. The graft-copolymerisation method forms the basis of the well-known "SIOPLAS" (RTM) commercial technique

1

for making crosslinkable ethylene/silane copolymers. In the well known single-step "MONOSIL" (RTM) process for making crosslinkable compositions of this type an ethylenically unsaturated silane compound is graft-polymerised onto an organic polymer in the presence of a free radical initiator and a silanol condensation catalyst. In this process the grafting reaction is performed simultaneously with the fabrication of the polymeric article, for example, by feeding the organic polymer, the unsaturated silane compound, the initiator, the silanol condensation catalyst and optional conventional additives to an extruder wherein the grafting reaction occurs and a crosslinkable product is extruded directly.

Crosslinkable organic polymers having hydrolysable silane groups (hereinafter referred to as "silyl modified polymers") can be fabricated to form a large variety of useful articles by conventional techniques, for example, extrusion, injection moulding, blow-moulding and film-blowing processes. The crosslinking step is generally carried out subsequent to fabrication of the article because the crosslinked polymer cannot in general be satisfactorily thermoformed.

A problem encountered with silyl modified polymers is that during storage or thermoforming operations the polymer can undergo premature crosslinking and this can lead to difficulties in the fabrication of articles from the polymer or to the production of articles having unsatisfactory physical and mechanical properties. The problem of crosslinking during storage may be reduced by ensuring that the silyl modified polymers are maintained in a moisture-free environment and by keeping the silanol condensation catalyst (or other additives known to promote crosslinking) separate from the polymer until the fabrication step is preformed. A technique frequently employed in the art is to make up a concentrated masterbatch containing the silanol condensation catalyst and other additives if any, in an organic polymer which does not spontaneously crosslink and which is compatible with the silyl modified polymer, and to blend this masterbatch with the silyl modified polymer during or just prior to thermoforming of the desired article. The fabricated article is then exposed to water, steam or moist air to cause crosslinking.

0150595

Problems resulting from premature crosslinking during thermoforming are more difficult to overcome. One method of reducing premature crosslinking proposed in GB-A-1357549 is to mould or extrude articles from silyl modified polymers in the absence of the silanol condensation catalyst and then to contact the produced article with an aqueous dispersion or solution of a tin carboxylate to cause the crosslinking.

It is an object of the present invention to provide an improved crosslinkable thermoplastic silyl modified polymer composition. It is a further object of the present invention to provide a crosslinkable thermoplastic silyl modified polymer composition which exhibits a reduced tendency to undergo premature crosslinking during the fabrication of articles therefrom.

Accordingly, the present invention provides a crosslinkable composition comprising a thermoplastic silyl modified polymer, a silanol condensation catalyst and a finely divided solid material having a mean particle diameter not greater than 20 microns, characterised in that the silanol condensation catalysts is supported on the finely divided solid material before blending or compounding with the silyl modified polymer or with any other thermoplastic component of the composition.

In the present invention the silyl modified polymer can be, for example, a copolymer prepared by copolymerising an olefinically unsaturated compound with an unsaturated silane compound having hydrolysable groups or can be, for example, a graft copolymer prepared by grafting an unsaturated silane compound having hydrolysable silane groups on to an organic polymer. Preferred silyl modified polymers are copolymers prepared by copolymerising ethylene, optionally together with one or more alpha-olefins, vinyl esters, alkyl(meth)acrylates, unsaturated nitriles or unsaturated ethers, with an unsaturated silane compound in the presence of a free radical initiator. Also preferred are graft copolymers prepared by grafting an unsaturated silane compound having hydrolysable groups on to polyethylene or on to a copolymer of ethylene with one or more alpha-olefins, vinyl esters, alkyl(meth)acrylates, unsaturated nitriles or unsaturated ethers,(e.g. vinyl ethers) by heating the polyethylene, or copolymer of ethylene, with the unsaturated silane compound in the presence of a free radical initiator, for example, an organic peroxide. The polyethylene or copolymer of ethylene can comprise, for example, low density polyethylene, low density ethylene hydrocarbon copolymers (e.g. LLDPE), high density polyethylene, ethylene/ethyl acrylate copolymer, ethylene/vinyl acetate copolymer or ethylene propylene rubber (EPR).

The silyl modified polymer can be formed "in situ" in the crosslinkable composition of the present invention, for example, by grafting an unsaturated silane compound on to polyethylene or on to a copolymer of ethylene of the type described above, in the presence of a free radical initiator and in the presence of the silanol condensation catalyst pre-supported on the finely divided solid support material.

The silane compound copolymerised with the ethylene, or graft copolymerised with the polyethylene or copolymer of ethylene, is preferably a compound having the general formula $R^1SiR^2_nY_{3-n}$ wherein $R^1$ represents an ethylenically unsaturated hydrocarbyl or hydrocarbyloxy group; $R^2$ represents an aliphatic saturated hydrocarbyl group; Y represents a hydrolysable organic group; and n represents zero, 1 or 2. Preferred unsaturated silane compounds for use in making the copolymer or graft copolymer are vinyl trimethoxy silane, vinyl triethoxy silane, vinyl tris (methoxy ethoxy) silane and vinyl triacetoxy silane.

Another method for forming silyl modified copolymers which can be employed in the composition of the present invention is the known "transesterification" method. In this method, for example, the alkoxy groups present in an ethylene/alkyl(meth)acrylate copolymer can be "ester exchanged" or replaced by a silane substituent bearing hydrolysable groups by reacting the copolymer with a suitable silane compound in the presence of a catalyst (for example, titanium tetraisopropylate). Examples of suitable silane compounds are acetoxy propyltri(m)ethoxy silane and (meth) acryloxypropyl tri(m)ethoxy silane. The transesterification method can also be used to prepare silyl modified copolymers by reacting an ethylene/vinyl acetate copolymer with a suitable silane compound bearing hydrolysable groups and an esterified carboxylic acid which exchanges with the acetate groups on the copolymer. A suitable silane compound is 4-(trimethoxysilyl) butanoic acid methyl ester.

Silyl modified polymers particularly preferred for use in the composition of the present invention are copolymers prepared by copolymerising ethylene, optionally together with up to 40% by weight (based on ethylene) of additional monomer selected from one or more vinyl esters or (meth)acrylates, and an unsaturated silane compound selected from vinyl trialkoxy silanes and vinyl triacetoxy silane, under a pressure of from 500 to 4000 bars and at a temperature in the range 150 to 400°C in the presence of a free radical polymerisation initiator.

The silyl modified polymer employed in the present invention is preferably a copolymer or a graft copolymer containing 0.1-10 wt %, most preferably 0.5 to 5 wt % of copolymerised units of the silane compound. Preferably the silyl modified polymer has a melt index (ISO 1133, 190°C, 2.16kg load) of 0.02 to 5 g/10 mins.

For further details of silyl modified polymers suitable for use in the present invention reference may be made to GB-A-2028831, GB-A-2039513, GB-A-1357549, GB-A-1415194, GB-A-1286460, GB-A-1234034 and US-A-3225018.

The silanol condensation catalyst employed in the composition of the present invention can be any such catalyst known in the art for crosslinking silyl modified polymers. Examples of suitable classes of silanol condensation catalysts are organic and inorganic acids and alkalis, and metal compounds, for example complexes or carboxylates of lead, cobalt, iron, nickel, zinc or tin. Examples of suitable silanol condensation catalyst are dibutyltin dilaurate, dibutyltin diacetate dibutyltin dioctoate, stannous acetate, stannous caprylate, lead naphthenate, zinc caprylate, cobalt naphthenate; ethylamines, dibutylamine, hexylamines, pyridine; inorganic acids such as sulfuric acid and hydrochloric acid; and organic acids such as toluenesulfonic acid, acetic acid, stearic acid and maleic acid. Carboxylates of tin are preferred. Particularly preferred silanol condensation catalysts are dialkyl tin dicarboxylates, for example dibutyl tin dilaurate, dibutyl tin dipalmitate, dibutyl tin distearate, and dioctyl tin dilaurate.

The quantity of silanol condensation catalyst employed in the present invention is suitably in the range 0.001 to 3.0 moles, preferably in the range 0.003 to 0.05 moles per mole of silyl units in the silyl modified polymer.

Generally speaking, the quantity of the silanol condensation catalyst pre-supported on the solid material is in the range of 0.001 to 10 percent by weight, preferably 0.01 to 5 percent by weight, particularly preferably 0.03 to 3 percent by weight, relative to the quantity of silyl modified polymer.

The finely divided solid material (hereinafter referred to as the support material) employed as a support for the silanol condensation catalyst is suitably a solid material which does not melt or decompose at thermoforming temperatures conventionally employed in fabricating articles from crosslinkable silyl modified polymers. Preferably the support material does not melt or decompose at a temperature below 150°C. Examples of classes of suitable support materials are metal oxides or salts, high melting point oxides of non-metals or semiconductors, natural or synthetic polymers and mineral earths. Examples of such support materials are silica, silicates, alumina, aluminates, silica-alumina, magnesium oxide, magnesium carbonate, calcium carbonate, calcium phosphate, hydroxyapatite, zirconia, titania, talc, celite, kieselguhr, graphite, carbon black, charcoal, zeolites, montmorillonite, pumice, fullers earth, cellulose and thermoset resins. The support material is preferably a porous material having a pore volume (as determined by mercury porosimetry) of at least 0.1 ml per gram, most preferably at least 0.4 ml per gram. Preferably the support material has a surface area (BET) of at least 50 $m^2/g$, most preferably at least 200 $m^2/g$. The mean particle diameter of the support material is preferably less than 10 microns.

The quantity of support material employed in the present invention is preferably at least sufficient to physically absorb or to adsorb the total quantity of the silanol condensation catalyst employed although smaller quantities of support material can be employed if desired. It is particularly preferred to employ an excess of support material in relation to the quantity which is fully saturated by the silanol condensation catalyst, for example from 1.1 to 1000 times this quantity. The quantity of silanol condensation catlayst required to fully saturate a given support material can be determined by conventional techniques, for example by measuring the pore volume of the support material or by "trial and error techniques", for example, impregnating weighed samples of the support material with varying weighed quantities of silanol condensation catalyst and examining the products under the microscope for the presence of unabsorbed silanol condensation catalyst. In the case that the silanol condensation catalyst is liquid at ambient temperature (e.g. dibutyl tin dilaurate), the support material will cease to behave as a free-flowing powder when an excess of said catalyst over the quantity required to fully saturate the support has been added.

The silanol condensation catalyst must be pre-supported on the support material before being incorporated into the crosslinkable composition of the present invention. The technique employed to support the silanol condensation catlayst on the support material can be for example a solid/liquid blending technique or a vapour/solid impregnation technique. For example, in the case that the silanol condensation catalyst is a liquid or can be melted or dissolved in a suitable solvent to form a liquid, it can be blended in this form with the desired quantity of support material until absorption has taken place, and solvent (if any) can be removed to produce the supported silanol condensation catalyst. In the case that the silanol condensation catalyst is a gas, or a volatile (or volatilisable) solid or liquid, the support material can be directly impregnated with the gas or vapour to produce the supported silanol condensation catalyst. Under the latter circumstances it is preferred to carry out the impregnation by fluidising the support material with the gas or vapour, optionally together with a suitable carrier gas,

0150595

for example nitrogen, dry air or argon.

The silanol condensation catalyst pre-supported on the support material can be incorporated into the crosslinkable composition of the present invention using blending techniques conventionally employed in the art, for example by directly incorporating the supported silanol condensation catalyst into the composition or by using a masterbatching technique.

A further aspec⁻ of the present invention provides a masterbatch suitable for blending with a silyl modified polymer to form a crosslinkable composition, the masterbatch comprising an ethylene homopolymer or a copolymer of ethylene with up to 40% by weight of copolymerised units of one or more other 1-olefins, vinyl esters or (meth)acrylates and a silanol condensation catalyst pre-supported on a finely divided solid material having a mean particle diameter not greater than 20 microns.

The present invention further comprises a process for forming an insulating coating on wire or cable comprising feeding to an extruder adapted for such extrusion-coating a thermoplastic silyl modified polymer or components which form such a polymer under the extrusion conditions a silanol condensation catalyst and a finely divided solid material having a mean particle diameter not greater than 20 microns, and crosslinking the extruded insulation by exposure to water, characterised in that the silanol condensation catalyst is supported on the finely divided solid material before blending or compounding with the silyl modified polymer or with any other thermoplastic component of the composition.

The composition of the present invention can contain additives conventionally employed in the art. Examples of such additives are antioxidants, fillers, metal deactivators (e.g. salicylaldehyde oximes), lubricants, water-tree inhibitors, flame retardants and pigments. Additives of this type are conventionally incorporated into the composition either directly or by a masterbatching technique.

A further aspect of the present invention provides a crosslinkable composition comprising

(1)  a silyl modified polymer,

(2) a silanol condensation catalyst pre-supported on a finely divided solid material having a mean particle diameter not greater than 20 microns and

(3) a phosphorus or antimony compound containing at least one X-R group wherein X represents the phosphorus or antimony, R is a hydrogen atom or is an organic substituent which is bonded to atom X via a carbon or oxygen atom and wherein X is in the trivalent or pentavalent state.

In this further aspect of the present invention the silyl modified polymer and the silanol condensation catalyst pre-supported on the finely divided solid material are the components of the crosslinkable composition and are employed in the manner as hereinbefore described.

Examples of classes of phosphorus compounds suitable for use in the present invention are organic phosphites, organic phosphonites, organic phosphines and organic phosphine oxides. The organic substituent R can be for example a hydrocarbyl group, an organic hetero-group or a hydrocarbyloxy group. The organic substituent R is preferably an alkoxyl or an aryloxy substituent, most preferably an alkoxyl substituent containing 1-30 carbon atoms. Preferred phosphorus compounds employed in this further aspect of the present invention are selected from those having the general formulae $R^4R^5POH$ and $R^4R^5P-R^6-(PR^7R^8)_n$ wherein $R^4, R^5, R^6, R^7$ and $R^8$ are the same or different and represent groups selected from alkyl, alkoxy, aryl or aryloxy groups each having up to 30 carbon atoms, and n is zero or 1. Preferably at least one, and most preferably all, of the groups $R^4$, $R^5$, $R^6$, $R^7$ and $R^8$ are alkyl or alkoxyl groups containing 3 to 12 carbon atoms. In the case that n is one, the $R^6$ group is "divalent" and can be, for example, alkylene; arylene; or -OMO- wherein O is oxygen and M is alkylene or arylene.

Examples of phosphorus compounds preferred for use in the further aspect of the present invention are dialkyl or trialkyl phosphites, for example tributyl phosphite, tri-n-hexyl phosphite, tri-iso-octylphosphite, trinonylphosphite and di-iso-octylphosphite.

Triphenyl stibine is an example of a suitable antimony compound.

The quantity of phosphorus or antimony compound employed in the further aspect of the present invention is suitably in the range 0.001 to 3.0 moles, preferably 0.003 to 0.05 moles per mole of silyl units in the organic silyl modified polymer.

In the further aspect of the present invention the mole ratio of phosphorus or antimony compound: silanol condensation catalyst preferably lies in the range 1:10 to 10:1. most preferably 1:3 to 5:1. The phosphorus or antimony compound can be blended into the composition using conventional techniques, for example by direct blending or by a masterbatch technique. In the further aspect of the present invention it is preferred to support the phosphorus or antimony compound on a support material of the type described above. Under these circumstances the support material can be the same as or different from that used to pre-support the silanol condensation catalyst. It is preferred to impregnate the phosphorus or antimony compound and the silanol condensation catalyst together into the support material.

The composition of the present invention can be used to manufacture crosslinked products using the technology known in the manufacture of articles from conventional silyl modified polymers of this type. For example, the composition can be use in blow-moulding, injection-moulding, film-blowing, calendering, extrusion, roto-moulding and extrusion-coating techniques. The composition is particularly preferred for wire and cable coating applciations. Wire and cable insulation prduced by extrusion coating using the composition of the present invention exhibits improved surface finish.

Articles fabricated from the composition of the present invention can be readily crosslinked by exposure to water, steam or moist air and, in general, relatively fast rates of cure are obtained.

The invention is illustrated in the following Examples.

Examples 1, 2 and Comparative Test A

In Example 1, dibutyl tin dilaurate was supported on a silica support material using the quantities indicated in Table 1. Similarly in Example 2 the dibutyl tin dilaurate and the tributyl phosphite were supported on the silica. The supporting step was carried out as follows. Into a 1 litre Pappenmeier mixer were placed GASIL HP 25 (100g) and liquid STANCLERE TL (Dibutyl tin dilaurate 100g). The mixture was blended for 3 minutes with a rotor speed of 100 RPM. To the mixture so formed, were added slip agent (150g) and antioxidant (600g). The resulting blend was homogenised by stirring for 5 minutes with a rotor speed of 1000RPM. In the Comparative Test no silica support material was employed. The ingredients shown in Table 1 were then blended together to make a masterbatch using a Werner and Pfleiderer ZSK 30 twin screw extruder at a screw speed of 200 revolutions per minute. The total quantity of composition prepared in each Example and in the Test was 10 Kg per run. The extruder barrel temperature was about 140°C close to the hopper zone, increasing to about 190°C at the extruder head. Extrusion was carried out to give a strand which was chopped to give the pelleted masterbatch.

The pelleted masterbatch (5 parts by weight) was dry blended with 95 parts by weight of a silyl modified polymer prepared by copolymerising ethylene with vinyl trimethoxy silane under high temperature and high pressure conditions using a free radical initiator. The silyl modified polymer contained 1.8 weight % of copolymerised vinyl trimethoxy silane, had a melt index (190°C, 2.16 Kg load) of 0.7 and a density of 923 Kg/m$^2$.

The dry blend was fed into the hopper of a Gottfert extruder equipped with a 25 mm screw having L:D of 23:1 and a 5 cm slot-casting die having a 3 mm die gap to produce an extruded tape. The die temperature was 210°C and the screw speed was 40 RPM. The extrudate was collected on a conveyor belt moving at a rate such that the tape thickness was maintained at 1.5 ± 0.1 mm. The extruded tape was cured by immersion for 1 hr in a water bath thermostated at 80°C. Visual examination of the tapes produced using the composition of the present invention (i.e. Examples 1 and 2) showed that the tapes were relatively free from surface imperfections and defects caused by premature crosslinking (i.e. crosslinking during extrusion). Tape having similar characteristics continued to be extruded even after 1 hours extrusion time. On the other hand, tape produced from the composition of Comparative Test A exhibited substantial surface irregularity caused by premature crosslinking in the extruder.

Samples of the crosslinked extruded tapes were then subjected to heat elongation testing according to IEC 540 (200°C, 20 g/ $mm^2$, 15 minutes). The heat elongation figures are recorded in Table 2.

TABLE 1

| Component | Example | | Comparative Test A |
|---|---|---|---|
| Support material* | 1.00 | 1.50 | – |
| Dibutyl tin dilaurate | 1.00 | 1.00 | 1.00 |
| Slip agent | 1.00 | 1.50 | 1.00 |
| Antioxidant | 5.00 | 6.00 | 5.00 |
| Low density PE | 92.00 | 89.00 | 93.00 |
| Tributyl phosphite | – | 1.00 | – |
| | Parts by weight | | |

*The support material was a commercial grade of silica having a mean particle diameter of 4.0 microns, a BET surface area of 400 $m^2$/g and a pore value of 1.0 ml/g (commercial GASIL HP 25).

TABLE 2

| | % Elongation |
|---|---|
| Example 1 | 35 |
| Comparative Test A | 150 |
| Example 2 | 64 |

0150595

Claims:

1. A crosslinkable composition comprising a thermoplastic silyl modified polymer, a silanol condensation catalyst and a finely divided solid material having a mean particle diameter not greater than 20 microns, characterised in that the silanol condensation catalyst is supported on the finely divided solid material before blending or compounding with the silyl modified polymer or with any other thermoplastic component of the composition.

2. A crosslinkable composition as claimed in claim 1 wherein the silyl modified polymer is a copolymer prepared by copolymerising ethylene, optionally together with one or more alpha-olefins, vinyl esters, alkyl(meth) acrylates, unsaturated nitriles or unsaturated ethers, with an unsaturated silane compound having hydrolysable groups in the presence of a free radical initiator.

3. A crosslinkable composition as claimed in claim 1 wherein the silyl modified polymer is a graft copolymer prepared by grafting an unsaturated silane compound having hydrolysable groups on to polyethylene or on to a copolymer of ethylene with one or more alpha-olefins, vinyl esters, alkyl(meth) acrylates, unsaturated nitriles or unsaturated ethers, by heating in the presence of a free radical initiator.

4. A crosslinkable composition as claimed in claim 3 wherein the graft copolymer is formed in situ by grafting the unsaturated silane compound on to the polyethylene or the said copolymer of ethylene in the presence of the free radical initiator and in the presence of the silanol condensation catalyst supported on the finely divided solid material.

5. A crosslinkable composition as claimed in any one of the preceding claims wherein the finely divided solid material is selected from materials which do not melt or decompose when the composition is thermoformed.

6    A crosslinkable composition as claimed in any one of the preceding claims wherein the finely divided solid material has a pore volume of at least 0.1 ml per gram.

7.    A crosslinkable composition as claimed in any one of the preceding claims wherein the quantity of finely divided solid material is at least sufficient to absorb the total quantity of silanol condensation catalyst.

8.    A crosslinkable composition as claimed in any one of the preceding claims wherein the silanol condensation catalyst is a dialkyl tin dicarboxylate.

9.    A composition as claimed in any one of the preceding claims wherein the silanol condensation catalyst is supported on the finely divided support material by blending the silanol condensation catalyst as liquid or in solution in a solvent such that absorption takes place.

10.    A composition as claimed in any one of the preceding claims which further comprises a phosphorus or anitmony compound containing at least one X-R group wherein X represents the phosphorus or antimony, R is a hydrogen atom or is an organic substituent which is bonded to atom X via a carbon or oxygen atom and wherein X is in the trivalent or pentravalent state.

11.    A process for forming an insulating coating on wire or cable comprising feeding to an extruder adapted for such extrusion coating a thermoplastic silyl modified polymer or components which form such a polymer under the extrusion conditions, a silanol condensation catalyst and a finely divided solid material having a mean particle diameter not greater than 20 microns, and crosslinking the extruded insulation by exposure to water, characterised in that the silanol condensation catalyst is supported on the finely divided solid material before blending or compounding with the silyl modified polymer or with any other thermoplastic component of the composition.